# EUROPEAN PATENT APPLICATION

(11) **EP 4 782 598 A1**
(43) Date of publication of application: **29.07.2026**
(21) Application number: 26154468.8
(22) Date of filing: 27.01.2026
(51) Int. Cl.: E01C 13/08, C08J 7/04

(54) **INFILL FOR AN ARTIFICIAL TURF INSTALLATION AND A METHOD FOR COATING A PARTICULATE SUBSTRATE TO BE USED AS SUCH AN INFILL**

(30) Priority: 28.01.2025 NL 2039703
(71) Applicant: Topcom B.V., 5347 KG OSS (NL)
(72) Inventor:
(74) Representative: Algemeen Octrooi- en Merkenbureau B.V.

(57) **Abstract**

The present invention relates to a method for coating a particulate substrate to be used as an infill for an artificial turf installation. The present invention also relates to a loose, particulate coated substrate consisting of a particulate substrate coated with a coating formulation and an artificial turf installation in which such particulate substrate is used as an infill.

## Description

The present invention relates to a method for coating a particulate substrate to be used as an infill for an artificial turf installation. The present invention also relates to a loose, particulate coated substrate consisting of a particulate substrate coated with a coating formulation and an artificial turf installation in which such particulate substrate is used as an infill.

Synthetic or artificial turf is a ground surfacing material designed to imitate both the appearance and function of natural grass. Within the sports world, synthetic turf gained popularity in 1966 when it was used in the Astrodome Stadium in Houston, Texas. Since then, over 11,000 synthetic turf fields have been installed in the United States and in Europe there are currently over 13,000 synthetic turf fields.

Synthetic turf fields have several advantages over natural grass fields. They do not require irrigation, fertilizers, or pesticide application, which saves water, labour, time, and reduces the likelihood that certain potentially toxic chemicals will be introduced into the environment. In addition, synthetic turf fields can be used more frequently because they do not become muddy after precipitation and do not require waiting periods between uses to facilitate repair and recovery. Although synthetic turf installation costs substantially more than natural grass, the overall long term expenses are lower.

Despite these practical advantages, there have been growing concerns about the safety of synthetic turf fields, particularly the infill materials. All synthetic turf fields share the same basic composition, i.e., polyethylene synthetic grass fibers, infill, and carpet backing. Crumb rubber is commonly used as the infill material and is mainly produced by fragmentation of scrap vehicle tires and consists of rubber polymer, reinforcing agents (e.g., carbon black), aromatic extender oil, vulcanization additives, antioxidants, anti-ozonants, and processing aids, such as plasticizers and softeners. The focus of concern has been on the crumb rubber infill due to its ubiquitous use, exposure potential, and components which may exert effects that are deleterious to human health. Human exposure to crumb rubber-derived chemicals may occur through inhalation, ingestion, and/or dermal contact.

Still today ground car tires are used as infill in an artificial turf installation, but its use has become heavily debated and like other types of infill is scheduled to be deregulated due to the implementation of the passing as stipulated by the REACH microplastic regulation (EU) 2023/2055 of 25 September 2023. Ground car tyres are generally less preferred due to leaching of heavy metals as well as polycyclic aromates, moreover smell related issues occur due to outgassing of the high content of butadiene residual monomer.

The use of an infill in artificial grass sports fields has numerous draw backs. For example, an artificial grass sports field provided with an infill requires intensive maintenance. The initially uniform distribution of the granular infill can be disturbed by intensive usage. As a result, areas containing hardly any infill may form in particular in places where the field is played on very intensively, for example in the goal area, which has an adverse effect on the quality of play, but which above all leads to an increased risk of injury. The distribution and the amount of the granular material of an artificial grass sports field provided with an infill must be verified at regular intervals and repairs must be carried out, if necessary. Furthermore, it has become apparent that the weather affects the properties of the infill with the passage of time, which has a negative effect on the quality of the infill and thus on the playing characteristics of the artificial grass sports field. A negative factor, for example, is the strong compaction of the infill, as a result of which the artificial grass sports field will feel increasingly hard during play, with an increased risk of injury. Furthermore, the synthetic infill may change (harden or become brittle) under the influence of the weather conditions (sunlight, for example), or even wash away because it floats.

Artificial turf installations suitable for sports fields consisting at least of a substrate to which first artificial grass fibres are attached and of a granular infill, which is provided between said first artificial grass fibres are known from the prior art, i.e. US 2008/014557, WO 2018/183756 and US 2018/0371708.

Infill materials are also well known in the art.

For example, WO 2004/022853 relates to a loose, particulate material consisting of silica sand grains coated with an elastomeric coating material.

US 4,337,283 relates to a playing surface for athletic games wherein resilient particles are present and comprise cork granules or rubber particles, wherein said rubber is natural rubber or a synthetic rubber selected from the group consisting of styrene-butadiene rubber, butyl rubber, cis-polyisoprene rubber, neoprene rubber, nitrile rubber and urethane rubber.

US 2003/161996 relates to a particulate material selected from the group consisting of hard and resilient granules, wherein the resilient granules are selected from the group consisting of cryogenically ground rubber; rubber; cork; polymer beads; synthetic polymer foam; styrene; perlite, neoprene, and EPDM rubber, and wherein the hard granules are selected from the group consisting of sand; hard aggregate; silica sand; gravel; slag; granulated plastic; and polymer beads.

WO 16/190744 relates to an infill layer comprising smooth, hard granules having a mean size of between 2.0 mm and 10 mm, wherein the granules comprise a thermoplastic material, selected from the group comprising: PE, PP, PA, PU, PS, ABS, PC, PET, PEF, PHA and PLA.

US 6,818,274 relates to an infill layer including both hard granules or particles, such as sand, rocks or other hard particles, as well as resilient particles chosen from the group of rubber, such as butyl rubber, nitrile rubber, crumb rubber or ground tire rubber, cryogenic rubber particles, neoprene, and polyethylene foam.

KR 102 018 068 relates to a hybrid filler for artificial turf manufactured by adding 2 to 10 wt. % of quartzite powder, clay powder and wood vinegar extract, which emit far-infrared rays and negative ions, to a composition of 10 to 15 wt. % of silicone, 10 to 15 wt. % of a styrene-butadiene copolymer, 5 to 10 wt. % of polyester, 10 to 30 wt. % of a paraffin-based or paraffin-naphthene-based mineral oil, 30 to 50 wt. % of talc or calcium carbonate, and 0.01 to 0.5 wt. % of an inorganic pigment.

US 2017/319943 relates to an artificial turf installation, wherein the layer of infill material defines a playing surface and consists of a particulate having an exterior surface comprising a polymeric material.

EP 3666976 relates to a turf infill comprising a mixture of cork particles, wherein the cork particles are coated with a polymer and/or resin component, and rubber particles, wherein the rubber particles are coated with a polymer and/or resin component. The polymer and/or resin component of the coating of the cork particles and/or rubber particles is polyvinyl butyral, wherein the coating of the cork particles comprises fillers, in particular barium sulphate, calcium carbonate, talc, quartz silica, silicates, oxides, hydroxides, hollow glass spheres, organic fillers or a combination thereof.

EP 1486613 relates to a particulate filling material for synthetic-grass cover, wherein the material comprises granules having a core of recycled-tyre material and a coating layer of a plastic material, which encapsulates the core of recycled-tyre material. The material of the coating layer comprises one of polyethylene, polyethylene of medium and low density, ethyl-vinyl-acetate (EVA), styrene-butadiene-styrene (SBS) and styrene-ethylene-butadiene-styrene (SEBS), wherein the material of the coating layer comprises a filler having a base of calcium carbonate and/or kaolin.

NL 2024145 relates to an artificial turf installation, comprising a pile fabric having a backing and a multiplicity of generally upstanding pile elements, and an infill overlying the backing and being interspersed between the upstanding pile elements. The infill comprises a loose, particulate material consisting of particles coated with a coating material, wherein said coating material comprises a biodegradable polymer.

The Fédération Internationale de Football Association (FIFA) is the international self-regulatory governing body of association football, beach soccer, and futsal. FIFA has created a lot of rules in the area of an artificial-turf pitch, especially that the characteristics of an infill, such as particle size, particle shape, bulk density and composition, must comply with the infill identification requirements.

In that context, polycyclic aromatic hydrocarbons (PAHs) are a widely occurring group of chemicals present in natural and manufactured materials, including some rubbers and plastics used to make infills for synthetic turf sports surfaces. Prolonged exposure to unacceptably high concentrations of PAHs can be harmful to human health, and it is therefore important that any polymeric infill does not have unacceptable amounts of PAHs.

To ensure that players and match officials, installation contractors and maintenance contractors are adequately protected, the European Union and other countries are establishing legislation that will limit the PAH content of infill materials.

FIFA has specific test methods for, inter alia, rotational shear stiffness (FIFA Test Method 2024-07), Skin/surface friction (FIFA Test Method 2024-10), Heat determination (FIFA Test Method 2024-12) and Infill splash (FIFA Test Method 2024-14).

The present inventors found that the use of the above mentioned resin formulations as a coating formulation for particulate matter has been found to give rise to too insufficient friction in the surface. The result of such a coating formulation is that the final product, i.e. the coated particle, will have a surface that is too slippery thereby rendering that type of surface layer unsuitable for use as a skin friction optimiser on coated substrates.

An object of the present invention is to provide a method for coating a particulate substrate to be used as an infill for an artificial turf installation, wherein the outer surface of the coated particulate substrate has an acceptable level of friction for being used as an infill for an artificial turf installation.

Another object of the present invention is to provide a method for coating a particulate substrate to be used as an infill for an artificial turf installation, wherein the coating formulation meets Regulation (EU) 2023/2055 that specifically targets synthetic polymer microparticles, commonly known as microplastics.

The present invention thus relates to a method for coating a particulate substrate to be used as an infill for an artificial turf installation, comprising the following steps:
- providing a particulate substrate,
- providing a liquid coating formulation,
- contacting the particulate substrate with the liquid coating formulation thereby obtaining a coated particulate substrate, wherein the liquid coating formulation further comprises at least a solid material for increasing the friction of the coating compared to a coating formulation without such solid material.

The present inventors found that one or objects can be achieved by incorporating a solid material into the liquid coating formulation and by applying such coating onto the particulate substrate. The coated particulate substrate thus obtained comprises a core and a cladding structure, wherein the core is the particulate substrate, and the cladding is the coating formulation. The outer surface of the coated particulate substrate obtained according to the present method consists of the cured coating formulation. The coated particulate substrate thus obtained complies to the FIFA standards.

In an example the at least a solid material is chosen from the group of corundum, aluminium oxide, magnesium oxide, gypsum, perlite, diatomaceous earth, pozzolana, baked clay, sand, sepiolite, vermiculite, huntite, hydro magnesite, hydrotalcite, mica, wollastonite, TiO₂, nano-cellulose powder, gypsum, kaolin, Fe-oxide, calcium carbonate, zeolite, fumed silica, cork, olive pits, wood, wood chips, compacted wood chips, biochar, coconut bark, micro fibrillated cellulose, lignin, corn and silica, or a combination thereof.

In an example of the present method the amount of the at least a solid material is in a range of at least 3 wt.%, preferably at least 5 wt.% and at most 30 wt.%, preferably at most 25 wt.%, based on the total weight of the coating formulation. In an example where the amount of the at least solid material is less than the lower limit, the increase of the friction is too low. In an example where the amount of the at least solid material is higher than the upper limit, the friction of the coated particulate substrate will be too high.

In an example of the present method the size of the at least a solid material is in a range of at least 0,025 µm, preferably at least 2 µm and at most 20 µm, preferably at most 6 µm. With a size below 0,025 µm it will be highly difficult to increase the friction of the coated particulate substrate to an acceptable level, whereas with a size above 20 µm the incorporation of such big particles in the coating will be difficult.

In an example of the present method the particle size of the particulate substrate is in a range of at least 0,5 mm, preferably at least 1 mm and at most 4 mm, preferably at most 2 mm, wherein the particulate substrate has a bulk density of 150-2500 kg/m³, preferably of 900-1500 kg/m³. A particulate substrate having a particle outside the range as claimed here will be unsuitable for being used as an infill for an artificial turf installation.

In an example of the present method the step of contacting the particulate substrate with the liquid coating formulation is carried out a temperature in a range of at least 10°C, preferably at least 15°C and at most 65°C, preferably at most 40°C.

In an example of the present method the thickness of the coating formulation comprising a solid material onto the coated particulate substrate is in a range of at least 2 µm, preferably at least 10 µm and at most 80 µm, preferably at most 40 µm. With a thickness of the coating formulation lower than 2 µm it will be difficult to incorporate the solid material into the coating. A thickness outside the upper range as now claimed will result in a coated particulate substrate that is too heavy.

In an example of the present method the liquid coating formulation is based on one or more carrier components chosen from the group of polylactic acid, polyhydroxyalkanoates, cellulose butyrate, cellulose acetate, nano-cellulose, micro-fibrillated cellulose, cellulose ester, bio-degradable alkyd, polybutylene succinate, polyalkylene ether, polycaprolactam, gum rosin, shellac, acetyl tributyl citrate, citrate ester, polyhydroxyalkanoates (PHA), poly(3-hydroxyvalerate (PHB), poly-3-hydroxybutyrate (P3HB), PH4B, polyhydroxy hexanoate (PHHx), poly(3-hydroxybutyrate-co-valerate (PHBV), poly(3-hydroxybutyrate-co-3-hydroxyhexanoate) PHBH, polysaccharide, ethyl vinyl acetate, polyvinyl acetate, polyvinyl alcohol, cellulose diacetate, cellulose triacetate, cellulose acetate butyrate, triacetin, mixtures of polylactic acid, polybutylene adipate terephthalate and thermoplastic starch, with biodegradability enhancing enzymes, or a combination thereof.

In another example of the present method the liquid coating formulation is based on one or more carrier components chosen from the group poloxamines, random EO/PO copolymers, alcohol ethoxylates, PEG-PPG-PEG monobutyl ethers, poly(ethylene oxide)-block-poly(propylene oxide)-block-poly(ethylene oxide) and biodegradable latex polymer.

Poloxamines are tetra-functional block copolymers resulting in an even higher thermal stability and better binding affinity to mineral surfaces like silica sand. In random EO/PO copolymers the monomers are arranged randomly, instead of "blocks" (PEO-PPO-PEO) resulting in lower pour points (remain liquid at lower temperatures), which is useful for applying coatings in cold climates without needing heated mixing tanks. Poly(ethylene oxide)-block-poly(propylene oxide)-block-poly(ethylene oxide) comprises a central hydrophobic chain of poly(propylene oxide) (PPO) flanked by two hydrophilic chains of poly(ethylene oxide) (PEO). An example of a biodegradable latex polymer is Harrison Malaya Ltd (trade name) 60% centrifuged latex HA (high ammonia).

In an example of the present method the liquid coating formulation further comprises one or more components chosen from the group of antistatic additives, such as mono, di and tri stearates, synthetic dyes, organic dyes, flakes, pigments, UV stabilizers, anti-microbial substances, fire retardants, cross linkers, coupling agents, melt flow enhancers and anti-slip agents.

In an example of the present method the liquid coating formulation is prepared by mixing said at least a solid material and said carrier component at a location where the coated particulate substrate is to be used as an infill for an artificial turf installation, for example at a sports field. Such method has a huge influence of the costs of transportation of the materials and also provides a flexible way of operation at the specific sports location.

In an example of the present method the coated particulate substrate is free from microplastics according to the ECHA regulatory framework 2023/2055. Regulation (EU) 2023/2055 restricts synthetic polymer microparticles on their own or intentionally added to mixtures with the aim of reducing the emission of microplastics in everyday products in order to protect the environment.

The present invention also relates to a loose, particulate coated substrate consisting of a particulate substrate coated with a coating formulation, wherein the coating formulation further comprises at least a solid material for increasing the friction of the coating compared to a coating formulation without such solid material.

In an example the loose, particulate coated substrate as discussed above, is free from microplastics according to the ECHA regulatory framework 2023/2055.

The present invention also relates to an artificial turf installation comprising:
a pile fabric having a backing and a multiplicity of generally upstanding pile elements; and
an infill overlying said backing and being interspersed between said upstanding pile elements, wherein said infill further comprises said loose, particulate coated substrate as discussed above.

The present invention also relates to the use of a loose, particulate coated substrate (1) as discussed above on playgrounds, exercise fields, indoor and outdoor run and sport tracks for acting as a sacrificial layer that is not shedding microplastics when used.

Reference will now be made in detail to compositions, embodiments, and methods of the present invention known to the inventors. However, it should be understood that disclosed embodiments are merely exemplary of the present invention which may be embodied in various and alternative forms. Therefore, specific details disclosed herein are not to be interpreted as limiting, rather merely as representative bases for teaching one skilled in the art to variously employ the present invention.

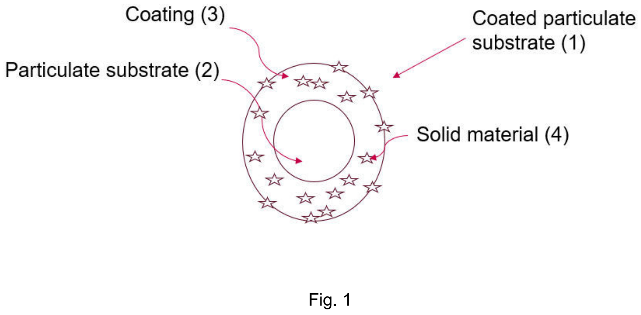

Figure 1 shows a schematic drawing of a coated particulate substrate according to the present invention.

Coated particulate substrate indicated by reference number 1 consists of a particulate substrate 2, surrounded by a coating 3, wherein coating 3 comprises solid material 4. Solid material 4 is incorporated into a carrier component (not shown).

### Examples

Substrates as shown in Table 3a were chosen.

**Table 3a: substrates**

| **substrate** | **type** | **description** | **short formula** | **size indication** | **shape** | **supplier** |
|---|---|---|---|---|---|---|
| 1 | mineral | calcium carbonate | CaCO3 | 0-1,0mm | round | Omya (BE) |
| 2 | mineral | calcium carbonate | CaCO3 | 0,5-0,9 | round | Omya (BE) |
| 3 | mineral | calcium carbonate | CaCO3 | 0,3-0,5 | round | Omya (BE) |
| 4 | mineral | Dead Burned Magnesia(DBM) | MgO | 0,1-0,9 | round | Magnesia (DE) |
| 5 | mineral | Silica Sand | SiO2 | 0,7-1,2 | round | Dansand (DK) |
| 6 | mineral | Brown corundum sand | Al2O3 | 0,5-1,0 | edgy | YongSeng (CN) |
| 7 | mineral | Light Burned magnesia (LBM) | MgO | 0,5-1,0 | edgy | Novapyr (GR) |
| 8 | mineral | Dead Burned Magnesia(DBM) | MgO | 0,5-1,0 | edgy | Novapyr (GR) |
| 9 | mineral | Calcined Caustic magnesia(CCM) | MgO | 0,5-1,0 | edgy | Kumas (TR) |
| 10 | organic | cork | | | irregular | Green Fields (NL) |
| 11 | organic | wood | type JST | | irregular | Saltex (FI) |
| 12 | organic | olive pits | | | oval | Fieldturf Tarkett (NL) |
| 13 | organic | compacted birch cubes | | 2-4 mm | blocky | Norfill (NO) |

Substrates 1-13 were provided with a coating layer and both water based, and solvent based coatings were used. The materials could be supplied in three different forms, i.e. i) as a water based coating, ii) as a dry powder - which has to be dissolved- or iii) as a solvent based coating liquid.

Type A: a water-based alkyd coating, supplied by Strea Chemicals, Rumania.

Type B: a solvent-based bio-degradable low molecular Polyalkylene Ether, supplied by Connect Chemicals GmbH , Germany.

Type C: a degradable poly caprolactam (PCL) power , obtained from Unilong China.

Type D: gum: rosin flakes, supplied by Intrachem Ltd Ireland.

Type E: Shellac, a resin secreted by the female bugs on trees in the forests of India and Thailand, supplied by Aschem GmbH Switzerland.

### Example F

An amount of 5 wt.% CITROFOL (trademark, bio-based citrate ester manufactured by the esterification of citric acid and ethanol, supplied by Jungbunzlauer, CH) was added to PLA/CTF type LX175 (Luminy, joint venture Total Corbion) and compounded to 1 mm micro beads.

### Example G

An amount of 5 wt.% Carbios active masterbatch (enzymatic activator) was added to PLA LX175 (Luminy, joint venture Total Corbion) and extruded and compounded to 1 mm micro beads. PLA /CARB

### Example H

An amount of 20 wt.% amorphous PLA (BluePHA type 360, manufacturer Bluepha, CN) was added to PLA LX175 (Luminy, joint venture Total Corbion) and extruded and compounded to 1 mm micro beads. PLA/ PHA

### Example I

An amount of 12 wt.% acetyl tributyl citrate (ATBC) and 2 wt.% calcium carbonate (CaCO₃) was added to PLA LX175 (Luminy, joint venture Total Corbion) and extruded and compounded to 1 mm micro beads. PLA/ATBC

### Example J

An amount of Blue Ridge (trademark, cellulose acetate flake, manufacturer Celanese) to which 12 wt.% acetyl tributyl citrate (manufacturer TECNOSINTESI, IT) was added and extruded and compounded to 1 mm micro beads.

### Example K

PHBH poly((R)-3-hydroxybutyrate-co-(R)-3-hydroxyhexanoate), obtained from SIGMA Aldrich.

### Example L

PHBH dispersion originating from Kaneka, Belgium.

### Example M

100% PHA resin, obtained from Blue PHA, China.

### Example N

unrefined PHA , 60%purity, obtained from Blue PHA, China.

### Example O

PBAT powder, obtained from Entec polymer Florida, USA.

### Example R,

PLA coating dispersion, made by Michelman, USA.

### Example S

Alkyd coating, supplied by Strea Chemicals, Rumania.

### Example T

A water based acrylic copolymer, supplied by Landry Enterprise Ltd , China.

### Example U

A water based ethyl vinyl acetate (EVA), supplied by Wacker Chemie AG, Germany.

In Table 3b and 3c the adhesion properties of coating materials on several substrates are shown.

**Table 3b: adhesion properties of coating materials on substrates**

| ID | type | supplied as | solvent | dissoved in Adhesion Excellent good medium poor | | | | | |
|---|---|---|---|---|---|---|---|---|---|
| | | | | % dry solids | CaCo3 | CaCo3 | CaCo3 | DBM | silica |
| | | | | | 1 | 2 | 3 | 4 | 5 |
| A | Alkyd | water based | water | 10% | | | | good | good |
| B | Polyalkylene | water based | water | 8% | | | | good | good |
| C | PCL | powder | toluene | 10% | | | | medium | medium |
| D | Gum rosin | flakes | alcohol | 10% | good | good | good | | good |
| E | Shellac | flakes | alcohol | 10% | good | good | good | | good |
| F | PLA/TRG | compound | chlorofrom | 10% | | | | | good |
| G | PLA /Carb | compound | chlorofrom | 10% | | | | | good |
| H | PLA/PHA | compound | chlorofrom | 20% | | | | | good |
| I | PLA /ATBC | compound | chlorofrom | 10% | | | | | good |
| J | CA | flakes | chlorofrom | 8% | | | | | good |
| K | PHBH powder | powder | acetonitriel | 10% | | | | good | good |
| M | PHBH dispersion | water based | water | 8% | | | | good | excellent |
| N | PHA powder | powder | acetonitriel | 10% | | | | good | excellent |
| O | unrefined PHA | water based | water | 40% | | | | medium | medium |
| Q | PBAT | powder | acetonitrile | 10% | | | | good | good |
| R | PLA | dispersion | water | 5% | | | | | poor |
| T | Alkyd | dry powder mixed in water | water | 10% | | | | good | good |
| U | Acrylate copolymer | water based | water | 20% | | | | | excellent |

**Table 3c: adhesion properties of coating materials on substrates**

| ID | type | supplied as | solvent | dissoved in % dry solids | corundum 6 | LBM 7 | DBM2 8 | CCM 9 | CORK 10 | WOOD 11 | OLIVE PITS 12 | Norfill 13 |
|---|---|---|---|---|---|---|---|---|---|---|---|---|
| A | Alkyd | water based | water | 10% | good | | | | good | good | good | good |
| B | Polyalkylene | water based | water | 8% | good | | | | | | | |
| C | PCL | powder | toluene | 10% | medium | medium | medium | poor | | | | |
| D | Gum rosin | flakes | alcohol | 10% | good | good | medium | poor | | | | |
| E | Shellac | flakes | alcohol | 10% | good | good | medium | | | | | |
| F | PLA/TRG | compound | chlorofrom | 10% | good | | medium | | | | | |
| G | PLA /Carb | compound | chlorofrom | 10% | good | | medium | | | | | |
| H | PLA/PHA | compound | chlorofrom | 20% | good | | medium | | | | | |
| I | PLA/ATBC | compound | chlorofrom | 10% | good | good | | poor | | | | |
| J | CA | flakes | chlorofrom | 8% | good | good | good | poor | | | | |
| K | PHBH powder | powder | acetonitriel | 10% | | | | poor | | | | |
| M | PHBH dispersion | water based | water | 8% | | | | | excellent | excellent | excellent | excellent |
| N | PHA powder | powder | acetonitriel | 10% | | | | | | | | |
| O | unrefined PHA | water based | water | 40% | | | | | | | | |
| Q | PBAT | powder | acetonitrile | 10% | | | | | | | | |
| R | PLA | dispersion | water | 5% | | | | | | | | |
| T | Alkyd | dry powder mixed in water | water | 10% | good | | | | | | | |
| U | Acrylate copolymer | water based | water | 20% | | | | | excellent | | | |

The following examples were prepared. The liquid coating formulations comprising a coating material, i.e. a carrier component, and a solid material as shown in Table 1 and Table 2 were prepared by mixing the starting materials in a small cement mixer. The coating formulations thus obtained were sprayed onto a substrate material (see Table 1 and Table 2) thereby obtaining a layer thickness of about 20-40-micron. The final coated particulate substrate was obtained after evaporation of the solvent via applying hot air of 40 °C over the product while tumbling. The drying time ranged from 15 to 60 minutes and the solvent was dried off in mobile extractor.

The results of different types of solid material and coating material are shown in Table 1 and Table 2.

Table 1 shows reference values for a composition of traditionally coated particulate substrate made by melting a polymer at elevated temperatures.

Table 2 shows liquid coating compositions made thereof.

Table 1 and Table 2 clearly show that the friction of the coated particulate substrate, as indicated by the term "skin friction", has increased when compared to a coated particulate substrate having a coating without the solid material.

**Table 1: reference values for a composition of traditionally coated particulate substrate made by melting a polymer at elevated temperatures.**

| | | **conventional polymer melting and coating** | | |
|---|---|---|---|---|
| method | | polymer melting | polymer melting | polymer melting |
| substrate used | type | sand | sand | sand |
| substrate size | mm | 0,8-1,2 | 0,8-1,2 | 0,8-1,2 |

| coating material | coating type | PE coated reference | Cellulose ester | Cellulose ester |
|---|---|---|---|---|
| coating addition dry | % m/m | 1% | 1% | 2% |
| skin friction | µ | 0,6 | 0,6 | 0,51 |
| shock absorbtion | % | 65 | 65 | 65 |
| vertical deformation | mm | 10 | 10 | 10 |

**Table 2: liquid coating compositions made.**

| | | **liquid coating** | | | | | | | |
|---|---|---|---|---|---|---|---|---|---|
| medium | | water | water | water | water | water | water | water | water |
| substate used | type (2) | sand | sand | sand | sand | sand | LBM (7) | LBM (7) | LBM (7) |
| substrate size | mm | 0,8-1,2 | 0,8-1,2 | 0,8-1,2 | 0,8-1,2 | 0,8-1,2 | 0,5-1,0 | 0,5-1,0 | 0,5-1,0 |
| coating material | coating type (3) | alkyd | alkyd | alkyd | alkyd | alkyd | alkyd | alkyd | alkyd |
| coating addition dry | % m/m | 2% | 2% | 2% | 2% | 2% | 5% | 5% | 5% |
| type of addition to coating | type (4) filler | | talcum | talcum | talcum | talcum | | kaolien | kaolien |
| % of addition to coating | addition type(4) in coating layer %,(m/m) | 0% | 5% | 10% | 15% | 25% | 0% | 5% | 10% |
| (FIFA TEST METHOD 2024-10 ) | | | | | | | | | |
| skin friction | friction µ | 0,5 | 0,52 | 0,53 | 0,6 | 0,8 | 0,55 | 0,64 | 0,65 |
| shock absorbtion | % | 65 | 65 | 65 | 65 | 65 | 65 | 65 | 65 |
| vertical deformation | mm | 10 | 10 | 10 | 10 | 10 | 10 | 10 | 10 |

**Table 2 (continued): liquid coating compositions made.**

| **liquid coating continued** | | | | | | | | |
|---|---|---|---|---|---|---|---|---|
| medium | | water | water | water | water | water | water | acetonitriel |
| substate used | type (2) | sand | sand | sand | cork | cork | sand | sand |
| substrate size | mm | 0,8-1,2 | 0,8-1,2 | 0,8-1,2 | 1-5 mm | 1-5 mm | 0,8-1,2 | 0,8-1,2 |
| coating material | coating type (3) | Acrylate copolymer | Acrylate copolymer | Acrylate copolymer | Acrylate copolymer | Acrylate copolymer | Acrylate copolymer | PBAT |
| coating addition dry | % m/m | 2% | 2% | 2% | 12% | 12% | 2% | 2% |
| type of addition to coating | type (4) filler | | MgO | MgO | | kaolien | MgO | MgO |
| % of addition to coating | addition type(4) in coating layer %,(m/m) | 0% | 10% | 20% | 0% | 15% | 20% | 20% |
| (FIFA TEST METHOD 2024-10 ) | | | | | | | | |
| skin friction | friction µ | 0,5 | 0,52 | 0,7 | 0,6 | 0,7 | 0,7 | 0,7 |
| shock absorbtion | % | 65 | 65 | 65 | 65 | 65 | 65 | 65 |
| vertical deformation | mm | 10 | 10 | 10 | 10 | 10 | 10 | 10 |

## Claims

1. A method for coating a particulate substrate (2) to be used as an infill for an artificial turf installation, comprising the following steps:
- providing a particulate substrate (2),
- providing a liquid coating formulation (3),
- contacting the particulate substrate (2) with the liquid coating formulation (3) thereby obtaining a coated particulate substrate (1), wherein the liquid coating formulation (3) further comprises at least a solid material (4) for increasing the friction of the coating compared to a coating formulation without such solid material.

2. A method according to claim 1, wherein said at least a solid material (4) is chosen from the group of corundum, aluminium oxide, magnesium oxide, gypsum, perlite, diatomaceous earth, pozzolana, baked clay, sand, sepiolite, vermiculite, huntite, hydro magnesite, hydrotalcite, mica, wollastonite, TiO₂, nano-cellulose powder, gypsum, kaolin, Fe-oxide, calcium carbonate, zeolite, fumed silica, cork, olive pits, wood, wood chips, compacted wood chips, biochar, coconut bark, micro fibrillated cellulose , lignin, corn and silica, or a combination thereof.

3. A method according to any one or more of the preceding claims, wherein the amount of said at least a solid material (4) is in a range of at least 3 wt.%, preferably at least 5 wt.% and at most 30 wt.%, preferably at most 25 wt.%, based on the total weight of the coating formulation.

4. A method according to any one or more of the preceding claims, wherein the size of said at least a solid material (4) is in a range of at least 0,025 µm, preferably at least 2 µm and at most 20 µm, preferably at most 6 µm.

5. A method according to any one or more of the preceding claims, wherein the particle size of said particulate substrate (2) is in a range of at least 0,5 mm, preferably at least 1 mm and at most 4 mm, preferably at most 2 mm, said particulate substrate (2) having a bulk density of 150-2500 kg/m³, preferably of 900-1500 kg/m³.

6. A method according to any one or more of the preceding claims, wherein the step of contacting the particulate substrate (2) with the liquid coating formulation (3) is carried out a temperature in a range of at least 10°C, preferably at least 15°C and at most 65°C, preferably at most 40°C.

7. A method according to any one or more of the preceding claims, wherein the thickness of the coating formulation (3) comprising at least a solid material (4) onto the coated particulate substrate (1) is in a range of at least 2 µm, preferably at least 10 µm and at most 80 µm, preferably at most 40 µm.

8. A method according to any one or more of the preceding claims, wherein said liquid coating formulation (3) is based on one or more carrier components chosen from the group of polylactic acid, polyhydroxyalkanoates, cellulose butyrate, cellulose acetate, nano-cellulose, micro-fibrillated cellulose, cellulose ester, bio-degradable alkyd, polybutylene succinate, polyalkylene ether, polycaprolactam, gum rosin, shellac, acetyl tributyl citrate, citrate ester, polyhydroxyalkanoates (PHA), poly(3-hydroxyvalerate (PHB), poly-3-hydroxybutyrate (P3HB), PH4B, polyhydroxy hexanoate (PHHx), poly(3-hydroxybutyrate-co-valerate (PHBV), poly(3-hydroxybutyrate-co-3-hydroxyhexanoate) PHBH, polysaccharide, ethyl vinyl acetate, polyvinyl acetate, polyvinyl alcohol, cellulose diacetate, cellulose triacetate, cellulose acetate butyrate, triacetin, mixtures of polylactic acid, polybutylene adipate terephthalate, thermoplastic starch, with biodegradability enhancing enzymes, poloxamines, random EO/PO copolymers, alcohol ethoxylates, PEG-PPG-PEG monobutyl ethers, poly(ethylene oxide)-block-poly(propylene oxide)-block-poly(ethylene oxide) and biodegradable latex polymer, or a combination thereof.

9. A method according to any one or more of the preceding claims, wherein said liquid coating formulation (3) further comprises one or more components chosen from the group of antistatic additives, synthetic dyes, organic dyes, flakes, pigments, UV stabilizers, anti-microbial substances, fire retardants, cross linkers, coupling agents, melt flow enhancers and anti-slip agents.

10. A method according to any one or more of the preceding claims, wherein the liquid coating formulation (3) is prepared by mixing said at least a solid material (4) and said carrier component at a location where the coated particulate substrate (1) is to be used as an infill for an artificial turf installation.

11. A method according to any one or more of the preceding claims, wherein the coated particulate substrate (1) is free from microplastics according to the ECHA regulatory framework 2023/2055.

12. A loose, particulate coated substrate (1) consisting of a particulate substrate (2) coated with a coating formulation (3), wherein the coating formulation (3) further comprises at least a solid material (4) for increasing the friction of the coating compared to a coating formulation without such solid material (4).

13. A loose, particulate coated substrate (1) according to claim 12, wherein the coated particulate substrate (1) is free from microplastics according to the ECHA regulatory framework 2023/2055.

14. An artificial turf installation comprising:
a pile fabric having a backing and a multiplicity of generally upstanding pile elements; and
an infill overlying said backing and being interspersed between said upstanding pile elements, wherein said infill further comprises said loose, particulate coated substrate (1) according to any one of claims 12-13.

15. The use of a loose, particulate coated substrate (1) according to any one of claims 12-13 on playgrounds, exercise fields, indoor and outdoor run and sport tracks for acting as a sacrificial layer that is not shedding microplastics when used.
